# EUROPEAN PATENT APPLICATION

(11) **EP 4 635 729 A1**
(43) Date of publication of application: **22.10.2025**
(21) Application number: 24170801.5
(22) Date of filing: 17.04.2024
(51) Int. Cl.: B32B 5/02, B32B 5/26, D04H 1/425, D04H 1/4258, D04H 1/4374, D21H 27/20, D21H 27/32, D21H 27/38

(54) **NON-WOVEN FABRIC AND METHOD FOR PRODUCING THE SAME**

(71) Applicant: Glatfelter Dresden GmbH, 01809 Heidenau (DE)
(72) Inventor: Ullrich, Thomas, 01796 Pirna (DE); Bauer, Armin, 76534 Baden-Baden (DE); Leistner, Andreas, 01809 Heidenau (DE)
(74) Representative: Lavoix

(57) **Abstract**

The present invention relates to a non-woven fabric comprising a base layer comprising 80 wt.-% or more of synthetic fibers, and a top layer comprising cellulosic fibers and 0 to 20 wt.-% of synthetic fibers, wherein a total of the base layer and the top layer comprises 50 wt.-% or more of synthetic fibers. The present invention further relates to a method for producing a non-woven fabric, a non-woven fabric obtainable by said method and uses of the non-woven fabric.

## Description

### FIELD OF THE INVENTION

The present invention relates to a non-woven fabric, which may be used as a wallpaper, a filter material, or the like, and a method for producing a non-woven fabric.

### BACKGROUND

Non-woven fabrics may be used for various purposes. Examples thereof include the use as packaging material, such as for food packaging; filter material, such as for infusion beverages, e.g. tea and coffee, or for liquid and air filtration; backing; insulation; geotextiles; separators, e.g. for Li-ion batteries; nonwoven substrates for hygiene, medical and personal care products, home care products, e.g. wipes, towels, napkins, clothing and tablecloths (table tops); speciality non-wovens, e.g. wallcoverings (wallpaper), shoe insoles, mattress and upholstery padding, just to name a few.

Wallpapers, as the name implies, are often mistakenly considered as papers, rather than as non-woven fabrics. For instance, DE 10 2006 058 929 B4 discloses a wallcover base substrate comprising a fibrous lower layer composed of a fibrous mixture based on cellulose and synthetic fibers and a fibrous upper layer composed of a cellulose-based fibrous mixture free of synthetic fiber. The overall synthetic fiber content of these wallpaper substrates is usually less than 30 wt.-% and they are typically characterized by a good dimensional stability (minimum wet extension), usable for paste on the wall technique (fast and easy way of applying wallcover) as well as a good printability of wallcover designs on coated base substrate (e.g. rotorgravure and PVC printing).

However, the described non-woven wallcover base substrate has the haptics (touch and feel) of plain paper, it does not feel like "real" nonwoven fabric. The reason for this is that the non-woven wallcover base substrate contains a low content of synthetic fibers, usually less than 30 wt.-%, most commonly 10-20 wt.-%.

There is currently a market need to provide a novel non-woven with the positive aspects of the described non-woven wallcover base substrate, but with predominantly synthetic fibers in the uncoated base layer. Such non-wovens are expected to touch and feel closer to a nonwoven fabric than paper and the product allows declaration as a real nonwoven, e.g. according to the definition of nonwovens in the HS customs tariff code.

However, by increasing the synthetic fiber content to 50 wt.-% and higher in the uncoated base (i.e. predominantly synthetic fibers), the air porosity (according to Bendtsen) of the product is significantly increased from about 1000 ml/min to 8000 to 8800 ml/min. This may result to at least one of the following consequences in the production process:
- Fiber deposits in the machine (rolls) & fiber flying/dusting in the machine, due to the weaker bonding of synthetic fibers.
- Coat strikes through the web on the coater; build-up of coat on the counter roll of the coater.
- Fiber release into the coating mix (recirculation), clogging of filters in the coating kitchen.
- Streaks in the coated surface of the product, caused by deposits (fibers, coat) in the coating unit
- Thickening of the coat in the coating unit

In summary, the machine runnability gets poorer and the machine must be stopped for cleaning (rolls, coater, coating kitchen, machine) after a very short period of operation (e.g. 2-3 hours or even less). Operation does not make sense from a commercial point of view.

Thus, there is a need for a non-woven fabric suitable for use as a wallcover base substrate having a good dimensional stability and good printability of wallcover designs and predominantly comprising synthetic fibers, but without causing the above described problems of high content synthetic fibers non-woven fabrics in production.

### OBJECT OF THE INVENTION

The present invention aims at overcoming the above-described problems and drawbacks. Thus, it may be an object of the present invention to provide a non-woven fabric suitable for use as a wallcover base substrate having a good dimensional stability and good printability of wallcover designs and predominantly comprising synthetic fibers, but without causing the above-described problems of high synthetic fiber content non-woven fabrics in production.

### SUMMARY OF THE INVENTION

The present inventors have made diligent studies and have found that this object can be solved by a non-woven fabric comprising two layers, i.e. a base layer having a high synthetic fiber content (80 wt.-% or more) and a top layer having a low synthetic fiber content (up to 20 wt.-%) or even being substantially free from synthetic fibers. By means of such a configuration with considerably different layer constitution in terms of synthetic fiber content, a non-woven fabric having a total content of synthetic fibers of 50 wt.-% or more can be obtained, thereby achieving the advantageous characteristics of a high synthetic fiber content non-woven fabrics (such as preferred haptics), while maintaining the advantageous characteristics of a good dimensional stability and good printability of wallcover designs and substantially (if not completely) avoiding the known problems of high synthetic fiber content non-woven fabrics in the production process.

Accordingly, the present invention relates to non-woven fabric comprising a base layer, wherein the base layer comprises 80 wt.-% or more of synthetic fibers, a top layer, wherein the top layer comprises (natural) cellulosic fibers and 0 to 20 wt.-% of synthetic fibers, wherein a total of the base layer and the top layer comprises 50 wt.-% or more of synthetic fibers.

The present invention further relates to a method for producing a non-woven fabric, the method comprising the steps of forming a first ply, wherein the first ply comprises 80 wt.-% or more of synthetic fibers, forming a second ply, wherein the second ply comprises cellulosic fibers and 0 to 20 wt.-% of synthetic fibers (wherein a total of the first ply and the second ply comprises 50 wt.-% or more of synthetic fibers), and combining the first ply and the second ply (for instance by couching) to obtain a non-woven fabric comprising a base layer, wherein the base layer comprises 80 wt.-% or more of synthetic fibers, a top layer, wherein the top layer comprises cellulosic fibers and 0 to 20 wt.-% of synthetic fibers, wherein a total of the base layer and the top layer comprises 50 wt.-% or more of synthetic fibers.

In addition, the present invention relates to a non-woven fabric obtainable (or obtained) by a method for producing a non-woven fabric as described herein.

Moreover, the present invention relates to use of the non-woven fabric as described herein for and/or as and/or in at least one selected from the group consisting of a wallpaper, a filter material, a packaging material, a backing, an insulation material, a geotextile, a separator, a nonwoven substrate for hygiene, medical and personal care products, a home care product, a speciality non-woven, a table top, a floor care, a shoe insole, a mattress and upholstery padding.

Other objects and many of the attendant advantages of embodiments of the present invention will be readily appreciated and become better understood by reference to the following detailed description of embodiments.

### DETAILLED DESCRIPTION OF THE INVENTION

Hereinafter, details of the present invention and other features and advantages thereof will be described. However, the present invention is not limited to the following specific descriptions, but they are rather for illustrative purposes only.

It should be noted that features described in connection with one exemplary embodiment or exemplary aspect may be combined with any other exemplary embodiment or exemplary aspect, in particular features described with any exemplary embodiment of a non-woven fabric may be combined with any other exemplary embodiment of a non-woven fabric, with any exemplary embodiment of a method for producing a non-woven fabric and with any exemplary embodiment of a use of the non-woven fabric and vice versa, unless specifically stated otherwise.

Where an indefinite or definite article is used when referring to a singular term, such as "a", "an" or "the", a plural of that term is also included and vice versa, unless specifically stated otherwise, whereas the word "one" or the number "1", as used herein, typically means "just one" or "exactly one".

The expression "comprising", as used herein, includes not only the meaning of "comprising", "including" or "containing", but may also encompass "consisting essentially of" and "consisting of".

Unless specifically stated otherwise, the expressions "at least a part of" or "at least partly", as used herein, may mean at least 5 % thereof, in particular at least 10 % thereof, in particular at least 15 % thereof, in particular at least 20 % thereof, in particular at least 25 % thereof, in particular at least 30 % thereof, in particular at least 35 % thereof, in particular at least 40 % thereof, in particular at least 45 % thereof, in particular at least 50 % thereof, in particular at least 55 % thereof, in particular at least 60 % thereof, in particular at least 65 % thereof, in particular at least 70 % thereof, in particular at least 75 % thereof, in particular at least 80 % thereof, in particular at least 85 % thereof, in particular at least 90 % thereof, in particular at least 95 % thereof, in particular at least 98 % thereof, and may also mean 100 % thereof.

In a first aspect, the present invention relates to a non-woven fabric.

The term "non-woven fabric", as used herein, may in particular mean a web of individual fibers which are at least partially intertwined, but not in a regular manner as in a knitted or woven fabric.

The non-woven fabric comprises a base layer and a top layer. Thus, the non-woven fabric comprises at least two different (separate, distinct) layers, which may be distinguished from each other, for instance visually by means of a microscope in a cross-sectional view of the non-woven fabric.

The terms "base layer" and "top layer", as used herein, do not necessarily imply a certain spatial orientation or arrangement. In particular, they do not necessarily mean that the base layer is located underneath the top layer. Just as an example, when used as a wallcover, the base layer may be arranged closer to the wall where the wallcover is to be applied than the top layer.

The base layer predominantly comprises synthetic fibers, more specifically 80 wt.-% or more of the fibers contained in the base layer are synthetic fibers.

The term "synthetic fibers", as used herein, may in particular mean fibers comprising (organic) polymers, in particular polymers that do not occur in nature, but are produced chemically and/or synthetically. Suitable examples thereof include fibers of polyethylene (PE), polypropylene (PP), polyester, such as polyethylene terephthalate (PET) and polylactic acid (PLA), and polyamide (PA). Synthetic fibers may (but need not) be thermoplastic and may then also be denoted thermoplastic fibers. The term "thermoplastic fibers", as used herein, may in particular denote fibers that soften and/or partly melt when exposed to heat and are capable to bind with each other or to other non-thermoplastic fibers, such as cellulosic fibers, upon cooling and resolidifying. However, in the present invention, it might be advantageous if the synthetic fibers do not melt in the production process and are therefore preferably uncured and/or non-crosslinked.

In an embodiment, the synthetic fibers comprise at least one selected from the group consisting of polyethylene terephthalate (PET) fibers, polypropylene (PP) fibers, polyethylene (PE) fibers, polyamide (PA), and polylactic acid (PLA) fibers, which have proven to be particularly suitable.

In an embodiment, the synthetic fibers typically have a length of from 1 to 30 mm, in particular from 2 to 15 mm, such as from 3 to 10 mm. The synthetic fibers typically have a coarseness of from 0.2 to 5 dtex, in particular from 0.3 to 2.5 dtex, such as from 0.4 to 2.0 dtex.

In an embodiment, the base layer comprises 80 to 99 wt.-%, in particular 82 to 98 wt.-%, in particular 83 to 97 wt.-%, in particular 85 to 95 wt.-%, such as 87 to 93 wt.-%, of synthetic fibers. The base layer may comprise 80 to 90 wt.-% or 90 to 100 wt.-% of synthetic fibers.

In an embodiment, the base layer further comprises cellulosic fibers, in particular up to 20 wt.-% of cellulosic fibers. For example, the top layer may comprise 1 to 20 wt.-% , in particular 2 to 18 wt.-%, in particular 3 to 15 wt.-% , in particular 4 to 12 wt.-%, such as 5 to 10 wt.-%, of cellulosic fibers. A small amount of cellulosic fibers within the ranges disclosed above may be advantageous for improving the sheet formation in the production process.

In another embodiment, the base layer may also comprise no cellulosic fiber at all. In particular, the base layer may only comprise synthetic fibers as fiber components.

The top layer comprises cellulosic fibers and 0 to 20 wt.-% of synthetic fibers.

The term "cellulosic fibers", as used herein, may in particular denote any fibers based on cellulose. In an embodiment, the cellulosic fibers may be of natural origin, such as wood pulp, and may therefore also be denoted "natural cellulosic fi bers".

In an embodiment, the cellulosic fibers comprise wood pulp (fibers), in particular softwood pulp and/or hardwood pulp, i.e. pulp fibers from softwood species (such as pine or fir) and/or pulp fibers from hardwood species (such as eucalyptus, maple or birch). Mixtures or blends of softwood pulp and hardwood pulp (for instance in a blending ratio of 50:50) may be suitable as well. Wood pulp may in particular denote a (lignocellulosic) fibrous material prepared by chemically or mechanically separating cellulose fibers from wood, such as by a kraft process (sulfate process). Kraft wood pulp may include northern bleached softwood kraft (NBSK) and southern bleached softwood kraft (SBSK) as well as their unbleached variants. The wood pulp may also be refined, such as beaten, and/or delignified. Moreover, the wood pulp may be bleached or unbleached.

In an embodiment, the wood pulp fibers, such as softwood pulp and/or hardwood pulp, may have an average fiber length of from 1.0 mm to 4.0 mm, for instance from 1.5 mm to 3.5 mm, such as from 2.0 mm to 3.0 mm. In an embodiment, the wood pulp fibers, such as softwood pulp and/or hardwood pulp, may have a fiber coarseness of from 0.3 to 3.5 dtex, such as from 0.6 to 2.5 dtex.

In an embodiment, the cellulosic fibers may also comprise (long) cellulosic fibers and/or regenerated (man-made) cellulose fibers.

The (long) cellulosic fibers (for instance from annual plants) may have an average fiber length of from 3 mm to 12 mm, such as from 4 mm to 10 mm, and may be selected from the group consisting of hemp fibers, manila fibers, jute fibers, sisal fibers, abaca fibers or combinations thereof.

The term "regenerated cellulose fibers", as used herein, may in particular denote man-made cellulose fibers obtained by a solvent spinning process. In an embodiment, the regenerated cellulose fibers may be selected from the group consisting of viscose (rayon) or lyocell. Viscose is a type of solvent spun fiber produced according to the viscose process typically involving an intermediate dissolution of cellulose as cellulose xanthate and subsequent spinning to fibers. Lyocell is a type of solvent spun fiber produced according to the aminoxide process typically involving the dissolution of cellulose in N-methylmorpholine N-oxide and subsequent spinning to fibers.

In an embodiment, the cellulosic fibers comprise at least one selected from the group consisting of (bleached or unbleached) (beaten or unbeaten) pulp fibers (such as wood pulp, thermomechanical pulp (TMP), chemithermomechanical pulp (CTMP), microfibrillated cellulose (MFC), nanofibrillated cellulose (NFC)), wastepaper fibers (i.e. cellulosic fibers obtained from a recycling process, such as from old newspapers or packaging material), and regenerated cellulose fibers, in particular selected from the group consisting of viscose or lyocell, such as highly beaten lyocell.

In an embodiment, the top layer comprises 20 to 100 wt.-%, in particular 40 to 90 wt.-%, in particular 50 to 80 wt.-% , in particular 60 to 75 wt.-%, such as 65 to 70 wt.-%, of cellulosic fibers. The base layer may comprise 20 to 60 wt.-% or 60 to 100 wt.-% of cellulosic fibers.

In an embodiment, the top layer comprises 1 to 20 wt.-%, in particular 2 to 18 wt.-%, in particular 3 to 15 wt.-% , in particular 4 to 12 wt.-%, such as 5 to 10 wt.-%, of synthetic fibers. A small amount of synthetic fibers within the ranges disclosed above may be advantageous for improving the adherence of the top layer to the base layer and thereby the integrity of the non-woven web.

In another embodiment, the top layer may also comprise no synthetic fiber at all. In this case, it might be advantageous to apply a strengthening agent between the top layer and the base layer for improving the adherence of the top layer to the base layer and thereby the integrity of the non-woven web.

A total of the base layer and the top layer comprises 50 wt.-% or more of synthetic fibers. In other words, at least 50 wt.-% of the fibers contained in the base layer and the top layer taken together are synthetic fibers. For instance, if base layer comprises 90 wt.-% of synthetic fibers and the top layer comprises 10 wt.-% of synthetic fibers, the grammage of the base layer must be equal to or more than the grammage of the top layer. Thus, not only the different contents of synthetic fibers in the base layer on the one hand and in the top layer on the other hand may be selected so as to achieve an overall content of synthetic fibers of 50 wt.-% or more, but also the proportion of the grammage of the base layer to the grammage of the top layer may be adjusted appropriately.

In an embodiment, the base layer and/or the top layer further comprises bicomponent fibers, such as bicomponent fibers of the sheath-core type. Bicomponent fibers are composed of two sorts of polymers having different physical and/or chemical characteristics, in particular different melting characteristics. A bicomponent fiber of the sheath-core type typically has a core of a higher melting point component and a sheath of a lower melting point component. Examples of bicomponent fibers include PET/PET fibers, PE/PP fibers, PET/PE fibers and PET/PP fibers.

In an embodiment, the base layer and/or the top layer further comprises an additive, in particular at least one selected from the group consisting of a wet-strength agent, a binder, and a filler.

In an embodiment, the non-woven fabric, in particular the base layer and/or the top layer, may further comprise a wet-strength agent. The term "wet-strength agent", as used herein, may in particular denote an agent that improves the tensile strength of the filter material in the non-woven fabric. Suitable examples of the wet-strength agent may include a melamine-formaldehyde resin or an epichlorohydrin resin, such as a polyamine-polyamide-epichlorohydrin resin. The wet-strength agent may be comprised in an amount of from 0.1 to 6 wt.-% based on the total weight of the non-woven fabric, in particular based on the total weight of the base layer and/or based on the total weight of the top layer. A wet-strength agent is typically added to a fiber blend prior to formation of a fibrous web or ply. For instance, a wet-strength agent may be applied into or prior to a head box of a paper-making machine.

In an embodiment, the non-woven fabric, in particular the base layer and/or the top layer, may further comprise a binder. The term "binder", as used herein, may in particular denote a chemical compound that is able to bind (e.g. by forming covalent bonds, by ionic interactions or the like) to two or more fibers, thereby interconnecting the fibers, resulting in an increased tensile strength of the web or fabric. Suitable examples of the binder include a latex binder, an acrylic binders, styrene-acrylate binder, starch and carboxymethyl cellulose (CMC), etc.. The binder may be comprised in an amount of from 0.05 to 20 wt.-%, such as in an amount of from 0.1 to 15 wt.-%, such as in an amount of from 0.25 to 10 wt.-%, such as in an amount of from 0.5 to 5 wt.-%, based on the total weight of the non-woven fabric, in particular based on the total weight of the base layer and/or based on the total weight of the top layer. A binder is typically applied after formation of the first and/or second plies (such as the base layer and/or the top layer).

In an embodiment, the non-woven fabric, in particular the base layer and/or the top layer, may further comprise a filler. Suitable examples of the filler include kaolin, titanium dioxide, carbonates, talcum or other pigments. The filler may be comprised in an amount of from 0.1 to 20 wt.-%, such as in an amount of from 0.2 to 15 wt.-%, such as in an amount of from 0.3 to 10 wt.-%, such as in an amount of from 0.4 to 5 wt.-%, such as in an amount of from 0.5 to 1 wt.-%, based on the total weight of the non-woven fabric, in particular based on the total weight of the base layer and/or based on the total weight of the top layer. A filler is typically added to a fiber blend prior to formation of a fibrous web or ply, but may also be applied after layer formation.

In an embodiment, the top layer and the base layer are adhered to each other by using a strengthening agent. Suitable examples of the strengthening agent include starch, starch, carboxymethyl cellulose, or any other binder. A strengthening agent is typically applied onto the base layer prior to the formation of the top layer so that the strengthening agent is arranged between the top layer and the base layer. By doing so, the strengthening agent may improve the adherence of the top layer to the base layer and thereby the integrity of the non-woven web.

In an embodiment, the top layer is at least partly coated with a coating layer. The coating layer may comprise inorganic compounds (such as kaolin, titanium dioxide, carbonates, talcum or other pigments), a binder (such as latex binder), and/or a thickening agent. The functional layer may provide additional characteristics or properties to the non-woven fabric, for instance a smoothing effect to get a uniform surface roughness and/or an improved paint coverage.

In an embodiment, the base layer is at least partly coated with a functional layer. The functional layer may comprise a binder (such as starch and/or carboxymethyl cellulose (CMC)) and/or a wax. The functional layer may provide additional characteristics or properties to the non-woven fabric, for instance an improved adherence to a wall when used as a wallcover. Moreover, a curling of the non-woven fabric may be suppressed or avoided.

In an embodiment, at least one of the top layer, the base layer, the optional coating layer and the optional functional layer further comprises a sizing agent and/or is at least partly coated with a sizing agent. Suitable examples of the sizing agent include alkyl ketene dimer (AKD), alkenyl succinic anhydride (ASA), and natural resins, such as rosin or lignin. A sizing agent may be added to a fiber blend prior to formation of a fibrous web or ply. In addition or alternatively, a sizing agent may be coated on a respective layer, for instance by means of a size press.

In an embodiment, the (entire) non-woven fabric has a grammage or basis weight of from 40 to 180 g/m², such as from 50 to 150 g/m², such as from 60 to 130 g/m². In addition or alternatively, the base layer has a basis weight in a range of from 10 to 100 g/m², in particular from 20 to 80 g/m²; the top layer has a basis weight in a range of from 5 to 50 g/m², in particular from 10 to 20 g/m²; the optional coating layer has a basis weight in a range of from 0 to 35 g/m², in particular from 5 to 30 g/m², and/or the optional functional layer has a basis weight in a range of from 0 to 5 g/m², in particular from 1 to 3 g/m².

In a second aspect, the present invention relates to a method for producing a non-woven fabric, in particular a non-woven fabric as described herein.

The method comprises the steps of:
forming a first ply or layer, wherein the first ply or layer comprises 80 wt.-% or more of synthetic fibers;
forming a second ply or layer, wherein the second ply or layer comprises cellulosic fibers and 0 to 20 wt.-% of synthetic fibers and;
combining the first ply and the second ply (for instance by couching) to obtain the non-woven fabric.

The product can be formed on multi-ply paper machines or on multi-layer paper machines. Both expressions are used in an equal way. Likewise, the terms "ply" and "layer" are used interchangeably herein.

In the method as described herein, the first ply typically leads to the base layer and the second ply typically leads to the top layer.

In an embodiment, the first ply and the second ply are formed by a wet-laid process using a wet-laid machine, such as by means of a flat wire machine (fourdrinier paper machine) or an inclined wire machine, as described for instance in US 2004/0129632 A1 or US 3,785,922, the disclosures of which are incorporated herein by reference. In particular, a duplex fourdrinier paper machine may be suitable.

The step of forming the first ply may in particular comprise laying down a first suspension of fibers in water, wherein the fibers comprise 80 wt.-% or more of synthetic fibers, onto an inclined or flat wire. Similarly, the step of forming the second ply may in particular comprise laying down a second suspension of fibers in water, wherein the fibers comprise cellulosic fibers and 0 to 20 wt.-% of synthetic fibers, onto an inclined or flat wire where the first suspension has been laid down.

The step of combining the first ply and the second ply may in particular comprise couching. In particular, the wet first and second plies may be compressed in a couch press, whereby the plies are pressed together by removing of water. In addition, a separate step of drying, for instance by using a Yankee dryer or a through-air dryer, may be performed. As a result, a non-woven fabric is obtained.

In an embodiment, the method further comprises applying a strengthening agent onto the first ply and/or the second ply, prior to combining the first ply and the second ply. In particular, the strengthening agent may be applied by spraying.

In an embodiment, the method further comprises applying a coating layer onto the top layer and/or a functional layer onto the base layer. The coating layer and/or the functional layer may be applied for instance by means of at least one of a film press, a size press, a blade coater, a rod bar coater, a liquid application system, a curtain coater, a wet end applicator (Valmet), and a spray coater.

In a third aspect, the present invention relates to a non-woven fabric obtainable (or obtained) by a method for producing a non-woven fabric as described herein. In particular, a non-woven fabric obtainable by a method for producing a non-woven fabric as described herein may have any of the properties or features of a non-woven fabric according to the first aspect, as described in the foregoing.

In a fourth aspect, the present invention relates to the use of the non-woven fabric as described herein for and/or as and/or in at least one selected from the group consisting of a wallpaper, a filter material, a packaging material, a backing, an insulation material, a geotextile, a separator, a nonwoven substrate for hygiene, medical and personal care products, a home care product, a speciality non-woven, a table top, a floor care, a shoe insole, a mattress and upholstery padding. Thus, while the object to be solved by the present invention has been described basically in the context of a wallpaper, the teaching underlying the present invention is not limited to the field of wallcoverings, but the non-woven fabric described herein may be used for many other purposes in other fields, such as for a filter material, a packaging material, a backing, an insulation material, a geotextile, a separator, a nonwoven substrate for hygiene, medical and personal care products, a home care product, a speciality non-woven, a table top, a floor care, a shoe insole, a mattress, upholstery padding and else. The terms "wallpaper", "wallcover", "wallcovering" are substantially interchangeable herein and may particularly denote a paper or non-woven fabric to be used in interior decoration to cover the interior walls of buildings.

While the present invention has been described in detail by way of specific embodiments and examples, the invention is not limited thereto and various alterations and modifications are possible, without departing from the scope of the invention.

## Claims

1. A non-woven fabric comprising
a base layer, wherein the base layer comprises 80 wt.-% or more of synthetic fibers,
a top layer, wherein the top layer comprises cellulosic fibers and 0 to 20 wt.-% of synthetic fibers,
wherein a total of the base layer and the top layer comprises 50 wt.-% or more of synthetic fibers.

2. The non-woven fabric according to claim 1, wherein at least one of the following is fulfilled:
wherein the base layer further comprises cellulosic fibers;
wherein the base layer and/or the top layer further comprises bicomponent fibers.

3. The non-woven fabric according to claim 1 or 2, wherein the cellulosic fibers comprise at least one selected from the group consisting of pulp fibers, wastepaper fibers, and regenerated cellulose fibers.

4. The non-woven fabric according to any one of the preceding claims, wherein the synthetic fibers comprise at least one selected from the group consisting of polyethylene terephthalate (PET) fibers, polypropylene (PP) fibers, polyethylene (PE) fibers, polyamide (PA) and polylactic acid (PLA) fibers.

5. The non-woven fabric according to any one of the preceding claims, wherein the base layer and/or the top layer further comprises an additive, in particular at least one selected from the group consisting of a wet-strength agent, a binder and a filler.

6. The non-woven fabric according to any one of the preceding claims, wherein the top layer and the base layer are adhered to each other by using a strengthening agent, in particular at least one selected from the group consisting of starch, carboxymethyl cellulose, or any other binder.

7. The non-woven fabric according to any one of the preceding claims, wherein the top layer is at least partly coated with a coating layer, in particular wherein the coating layer comprises an inorganic compound, a binder and/or a thickening agent.

8. The non-woven fabric according to any one of the preceding claims, wherein the base layer is at least partly coated with a functional layer, in particular wherein the functional layer comprises a binder and/or a wax.

9. The non-woven fabric according to any one of the preceding claims, wherein at least one of the following is fulfilled:
the base layer has a basis weight in a range of from 10 to 100 g/m²,
the top layer has a basis weight in a range of from 5 to 50 g/m²,
an optional coating layer has a basis weight in a range of from 0 to 35 g/m2,
an optional functional layer has a basis weight in a range of from 0 to 5 g/m2,
the non-woven fabric has a basis weight in a range of from 40 to 180 g/m².

10. A method for producing a non-woven fabric, the method comprising the steps of:
forming a first ply, wherein the first ply comprises 80 wt.-% or more of synthetic fibers;
forming a second ply, wherein the second ply comprises cellulosic fibers and 0 to 20 wt.-% of synthetic fibers, and;
combining the first ply and the second ply to obtain a non-woven fabric comprising:
a base layer, wherein the base layer comprises 80 wt.-% or more of synthetic fibers,
a top layer, wherein the top layer comprises cellulosic fibers and 0 to 20 wt.-% of synthetic fibers,
wherein a total of the base layer and the top layer comprises 50 wt.-% or more of synthetic fibers.

11. The method according to claim 10, wherein the first ply and the second ply are formed by a wet-laid process using a wet-laid machine, such as by means of a flat wire machine or an inclined wire machine.

12. The method according to claim 10 or 11, wherein the method further comprises:
applying a strengthening agent onto the first ply and/or the second ply, prior to combining the first ply and the second ply.

13. The method according to any one of claims 10 to 12, wherein the method further comprises:
applying a coating layer onto the top layer and/or a functional layer onto the base layer.

14. A non-woven fabric obtainable by a method according to any one of claims 10 to 13.

15. Use of the non-woven fabric according to any one of claims 1 to 9 or 14 for at least one selected from the group consisting of a wallpaper, a filter material, a packaging material, a backing, an insulation material, a geotextile, a separator, a nonwoven substrate for hygiene, medical and personal care products, a home care product, a speciality non-woven, a table top, a floor care, a shoe insole, a mattress and upholstery padding.
